(19) Europäisches Patentamt / European Patent Office / Office européen des brevets

(11) **EP 4 231 220 A2**

(12) # EUROPEAN PATENT APPLICATION

(43) Date of publication:
**23.08.2023 Bulletin 2023/34**

(21) Application number: **23184698.1**

(22) Date of filing: **07.02.2020**

(51) International Patent Classification (IPC):
***G06Q 20/34*** *(2012.01)*   ***G06Q 20/38*** *(2012.01)*
***G06Q 20/40*** *(2012.01)*

(52) Cooperative Patent Classification (CPC):
**G06Q 20/351; G05B 19/04; G05D 1/00; G05D 1/02;
G06Q 20/229; G06Q 20/34; G06Q 20/38;
G06Q 20/385; G06Q 20/40; G06Q 20/4012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.02.2019 KR 20190015223**

(62) Document number(s) of the earlier application(s) in
accordance with Art. 76 EPC:
**20752730.0 / 3 754 580**

(71) Applicant: **SSenStone Inc.
Seoul 08389 (KR)**

(72) Inventor: **YOO, Chang Hun
07050 Seoul (KR)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

Remarks:
This application was filed on 11-07-2023 as a
divisional application to the application mentioned
under INID code 62.

(54) **METHOD, PROGRAM, AND SYSTEM FOR PROVIDING VIRTUAL CORPORATE CARD-BASED
FINANCIAL TRANSACTION**

(57) Disclosed are a method, a program, and a system for providing a virtual corporate card-based financial transaction.

The virtual corporate card-based financial transaction providing method performed by a payment server may include setting a virtual corporate card number generation condition for a manager application, wherein the manager application is installed in a user terminal of a corporate card manager, and generates a virtual corporate card number used to search for an actual corporate card number, obtaining a first virtual corporate card number issued to a first employee by the manager application, wherein the first virtual corporate card number is generated by the manager application at a point in time when the first employee makes a request for the virtual corporate card number, and making a payment with the actual corporate card number found based on the first virtual corporate card number.

**FIG. 1**

Processed by Luminess, 75001 PARIS (FR)

EP 4 231 220 A2

**Description**

[TECHNICAL FIELD]

Embodiments of the inventive concept described herein relate to a method, program, and system for providing a virtual corporate card-based financial transaction.

[BACKGROUND ART]

A corporate card refers to a card issued against a corporate body, which is a card that may increase the transparency of expenses used by the corporate body and may cover the mandatory use of the card prescribed in the tax law.

Generally, the corporate card is managed for each employee or organization by the manager in a corporate body; and a card issuer issues a card, of which the card number is assigned to each target (employee or organization).

Code-type data is being used in a lot of fields. In addition to the card number or account number used to make a payment, the data of a code type includes an IPIN number, a resident registration number, or the like for user identification.

However, the code data may be leaked when such the code data is used. In the case of a card number, because the real card number is recorded on the card surface as it is, the real card number is visually exposed to other people. Upon making a payment using a magnet, the card number is leaked to other people while being transmitted to a POS device.

The virtual code has been used to prevent the actual code from being leaked. However, the data for identifying a user is needed to search for the actual code corresponding to the virtual code. For example, the code of One Time Password (OTP) is changed and generated every time. However, in the case of OTP, a login procedure is needed to determine the algorithm assigned to the user, and it is difficult for OTP to be applied to various fields.

[DETAILED DESCRIPTION OF THE INVENTION]

[TECHNICAL PROBLEM]

In general, the conventional corporate card management method receives a plurality of actual corporate cards from financial companies, and issues and collects the actual corporate card to employees if necessary.

Embodiments of the inventive concept provide a method, program, and system for providing virtual corporate card-based financial transaction that may reduce the issuance of unnecessary physical corporate cards and may conveniently and quickly manage the issuance and management of corporate cards in real time.

Furthermore, embodiments of the inventive concept provide a method, program, and system for providing virtual corporate card-based financial transaction that may allow an actual corporate card number not to be exposed to the outside and may verify the validity of a virtual corporate card number to make a payment when a financial transaction is made with a virtual corporate card.

Moreover, embodiments of the inventive concept provide a method, program, and system for providing virtual corporate card-based financial transaction that may be used by adding only an algorithm without changing the conventional payment process.

The technical problems to be solved by the present inventive concept are not limited to the aforementioned problems, and any other technical problems not mentioned herein will be clearly understood from the following description by those skilled in the art to which the inventive concept pertains.

[TECHNICAL SOLUTION]

According to an exemplary embodiment, a virtual corporate card-based financial transaction providing method performed by a payment server may include setting a virtual corporate card number generation condition for a manager application, wherein the manager application is installed in a user terminal of a corporate card manager, and generates a virtual corporate card number used to search for an actual corporate card number, obtaining a first virtual corporate card number issued to a first employee by the manager application, wherein the first virtual corporate card number is generated by the manager application at a point in time when the first employee makes a request for the virtual corporate card number, and making a payment with the actual corporate card number found based on the first virtual corporate card number.

Furthermore, in the method, the first virtual corporate card number is generated based on time data corresponding to the point in time when the virtual corporate card number is requested, and is not duplicated with a virtual corporate card number generated at another point in time.

Moreover, in the method, the obtaining of the first virtual corporate card number includes extracting and obtaining the first virtual corporate card number from a storage area found by a first virtual employee card number, and the first virtual employee card number is self-generated by a virtual employee card number generation function pre-stored in an employee application and is changed every unit time.

Also, in the method, the obtaining of the first virtual corporate card number includes extracting and obtaining the first virtual corporate card number from a storage area found by a first empty card number. The first empty card number is a number stored in an empty card registered by the first employee in an employee application and is connected to a storage area where the first virtual corporate card number is stored, and a number of the empty card is not printed on a surface.

Besides, in the method, when the first employee registers and uses the first virtual corporate card number in a separate mobile payment service, the obtaining of the first virtual corporate card number includes receiving, by the payment server, the first virtual corporate card number from a mobile payment service server based on an identifier number (BIN) included in the first virtual corporate card number when the first employee uses a corporate card payment by using the mobile payment service.

In addition, in the method, the making of the payment includes approving the payment by determining whether the first virtual corporate card number is a virtual corporate card number generated by the manager application.

Furthermore, in the method, the making of the payment may include determining whether the first virtual corporate card number is identical to a virtual corporate card number stored in a storage area found by the first virtual corporate card number and searching for the actual corporate card number based on the first virtual corporate card number.

Moreover, in the method, the first virtual corporate card number includes a plurality of detailed codes used to search for the actual corporate card number. The plurality of detailed codes have a correlation for searching for the actual corporate card number. The actual corporate card number is found by performing calculation based on the correlation from a waypoint via the waypoint corresponding to one or more detailed codes of the plurality of detailed codes.

Also, the method may further include receiving and registering the first virtual corporate card number from an employee application or the manager application for use. The employee application is an application of an employee receiving the first virtual corporate card number generated from the manager application.

Besides, in the method, the receiving and registering of the first virtual corporate card number may include searching for a user identification (UID) assigned at registration in the employee application, storing the received virtual corporate card number in a storage area connected to the UID, searching for a company identification (CID) based on the received virtual corporate card number, and storing the received virtual corporate card number in a storage area connected to the CID when receiving a virtual corporate card number from the employee application.

Furthermore, in the method, the virtual corporate card number generation condition may be stored in the storage area connected to the CID by being matched with the received virtual corporate card number. The virtual corporate card number generation condition may include expiration date or usage limitations.

Moreover, in the method, the virtual corporate card number stored in the storage area connected to the CID may be deactivated or deleted when the expiration date expires.

Also, the method may further include determining whether the received virtual corporate card number corresponds to a corporate card group, based on an identifier number (BIN) included in the received virtual corporate card number.

Besides, in the method, the receiving and registering of the first virtual corporate card number may further include receiving employee identification information from the manager application and matching and storing the employee identification information with the virtual corporate card number in the storage area connected to the CID.

According to an exemplary embodiment, a program for providing a virtual corporate card-based financial transaction may be stored in a medium to execute the virtual corporate card-based financial transaction providing method in combination with a computer that is a piece of hardware.

According to an exemplary embodiment, a system for providing a virtual corporate card-based financial transaction includes a virtual corporate card number generation condition setting unit setting a virtual corporate card number generation condition for a manager application, a first virtual corporate card number acquisition unit obtaining a first virtual corporate card number issued to a first employee by the manager application, and a payment execution unit making a payment with the actual corporate card number found based on the first virtual corporate card number. The manager application is installed in a user terminal of a corporate card manager, and generates a virtual corporate card number used to search for an actual corporate card number. The first virtual corporate card number is generated by the manager application at a point in time when the first employee makes a request for the virtual corporate card number.

Furthermore, the system may further include a UID search unit searching for a UID assigned at registration in an employee application, a CID search unit searching for a CID based on the first virtual corporate card number, and an actual corporate card number search unit searching for the actual corporate card number based on the first virtual corporate card number.

Other details according to an embodiment of the inventive concept are included in the detailed description and drawings.

[ADVANTAGEOUS EFFECTS OF THE INVENTION]

According to an embodiment of the inventive concept, a corporate body may issue a plurality of virtual corporate card numbers matched with one actual corporate card number without the need to issue an actual corporate card number to each employee, thereby simplifying a process of issuing corporate cards to employees, and saving the cost of issuing physical cards.

Furthermore, according to an embodiment of the inventive concept, a manager may issue corporate cards in real time through a manager application, and may set permissions (e.g., the period of use, the degree of use, or the like), thereby managing corporate cards conveniently and quickly.

Moreover, according to an embodiment of the inventive concept, an employee may select a payment means (offline payment means such as general plastic cards, one-time virtual card number-based online/offline payment means, and conventional simple payment means such as Google Pay, or the like), which is convenient for the employee, to make a corporate card payment.

Also, according to an embodiment of the inventive concept, when the payment means selected by an employee is used, a virtual corporate card number provided from a manager to the employee is not exposed directly, thereby preventing cardless transaction fraud caused by the leakage of the virtual corporate card number.

Besides, according to an embodiment of the inventive concept, when an algorithm for generating a virtual code and searching for the code storage space for payment is added, the conventional processes may be maintained as it is. For example, when a virtual code is generated and provided without duplication by an application providing a financial transaction service, a POS device and a PG server may transmit the virtual code to a payment server while being maintained as it is, and then the payment server may search for the storage area of a payment code corresponding to the virtual code to make a payment. As such, a portion to be changed in the conventional process may be minimized to increase security and the user does not need to perform an additional step to improve security.

The effects of the present inventive concept are not limited to the aforementioned effects, and other effects not mentioned herein will be clearly understood from the following description by those skilled in the art to which the inventive concept pertains.

[DESCRIPTION OF THE DRAWINGS]

FIG. 1 is a block diagram of a system providing a financial transaction based on a virtual corporate card according to an embodiment of the inventive concept.

FIG. 2 is a block diagram of a payment server according to an embodiment of the inventive concept.

FIG. 3 is a block diagram of a payment server including a detailed configuration of a search unit according to an embodiment of the inventive concept.

FIG. 4 is a flowchart schematically illustrating a method of providing a financial transaction based on a virtual corporate card according to an embodiment of the inventive concept.

FIG. 5 is an exemplary view illustrating examples according to a payment means for a step of obtaining a virtual corporate card number by a payment server according to an embodiment of the inventive concept.

FIG. 6 is a flowchart schematically illustrating a detailed process of a payment execution step according to an embodiment of the inventive concept.

FIG. 7 is a flowchart illustrating a method of providing a financial transaction based on a virtual corporate card further including a virtual corporate card number registration step according to an embodiment of the inventive concept.

FIG. 8 is a flowchart schematically illustrating a detailed process of a virtual corporate card number registration step according to an embodiment of the inventive concept.

FIG. 9 is a flowchart illustrating a virtual corporate card number registration step further including a step of identifying a corporate card group according to an embodiment of the inventive concept.

FIG. 10 is a flowchart illustrating a virtual corporate card number registration step further including a step of receiving and storing employee identification information according to an embodiment of the inventive concept.

FIG. 11 is an exemplary diagram illustrating that a search algorithm is driven according to an embodiment of the inventive concept.

[BEST MODE]

The above and other aspects, features and advantages of the inventive concept will become apparent from the following description of the following embodiments given in conjunction with the accompanying drawings. The inventive concept, however, may be embodied in various different forms, and should not be construed as being limited only to the illustrated embodiments. Rather, these embodiments are provided as examples so that the inventive concept will be thorough and complete, and will fully convey the concept of the inventive concept to those skilled in the art. The inventive concept may be defined by scope of the claims.

The terminology used herein is for the purpose of describing embodiments and is not intended to limit the inventive concept. In the specification, the singular forms include plural forms unless particularly mentioned. The terms "comprises" and/or "comprising" used herein does not exclude presence or addition of one or more other elements, in addition to the aforementioned elements. The same reference numerals denote the same elements throughout the specification. As used herein, the term "and/or" includes any and all combinations of one or more of the associated components. It will be understood that, although the terms "first", "second", etc., may be used herein to describe various components, these components should not be limited by these terms. These terms are only used to distinguish one component from another component. Thus, a first component discussed below could be termed a second component without departing from the teachings of the inventive concept.

Unless otherwise defined, all terms (including technical and scientific terms) used herein have the same meaning as commonly understood by those skilled in the art to which the inventive concept pertains. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein.

In this specification, a "corporate card" refers to a card for handling the cost of an organization such as a corporate body. That is, the "corporate card" includes not only a card issued by a financial company to the corporate body, but also a card issued by a refining company to a corporate body to make a payment. Also, even though it is referred to as a corporate card, the subject of the corporate card is not limited to a corporate body, but includes any organization composed of a plurality of members.

In this specification, a 'character' is a component of a code and includes all or part of uppercase alphabet characters, lowercase alphabet characters, numerals, and special characters.

In this specification, a 'code' refers to a string of characters.

In this specification, "user identification (UID)" refers to a unique code-type value assigned without redundancy for each user to identify a user.

In this specification, "company identification (CID)" refers to a unique code-type value assigned without redundancy for each organization to identify an organization such as a corporate body.

In this specification, an 'actual corporate card number' is the number assigned to an actual corporate card issued by a financial company or a card company, and means an actual card number for a corporate body assigned to a general physical card, a mobile card, and the like.

In this specification, a "virtual corporate card number" means a virtual card number for a corporate body used to search for an actual corporate card number or CID or to search for CID.

In this specification, a "user terminal" is any electronic device including an application processor (AP) capable of driving an application. The user terminal includes a non-portable desktop computer or a portable mobile device (e.g., a smart phone, a tablet PC, a personal digital assistant (PDA), an enterprise digital assistant (EDA), a portable multimedia player (PMP), a personal navigation device (PND), a wearable device, or the like), but is not limited thereto.

In this specification, a "wearable device" means a device capable of being used or carried by being attached to or worn on a body. As a specific example, the user terminal may be implemented in various shapes such as an empty card, a smart watch, watches, bracelets, anklets, rings, necklaces, glasses, shoes, clothing, or the like, but is not limited thereto. The user terminal includes any shape capable of being attached to or worn on a body.

In this specification, the "empty card" is a separate card that is distinguished from a user's actual card, and refers to a card not connected to a specific financial company or payment company. In the meantime, a separate empty card number or an identification number (e.g., serial number) may be assigned to the empty card.

In this specification, a "virtual corporate card number generation condition" means a condition to generate a virtual corporate card number of the corresponding corporate body set for each manager application by the payment server. For example, the virtual corporate card number generation condition may be assigned to the manager application in the form of a virtual corporate card number generation algorithm.

In this specification, an "individual virtual corporate card number usage condition" means a condition to restrict the use of a virtual corporate card number issued to an employee. For example, the individual virtual corporate card number usage condition may include, but is not limited to, information on expiration date, usage limitations, affiliated usage target stores, and the like.

Hereinafter, embodiments of the inventive concept will be described in detail with reference to accompanying drawings.

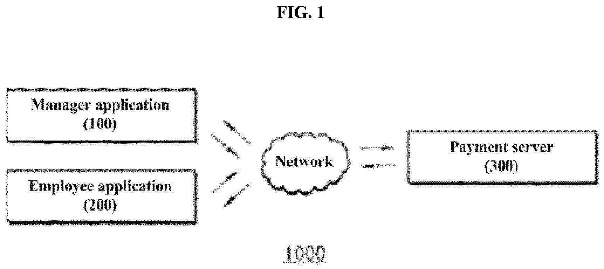

FIG. 1 is a block diagram of a system 1000 providing a financial transaction based on a virtual corporate card according to an embodiment of the inventive concept.

Referring to FIG. 1, according to an embodiment of the inventive concept, the system 1000 providing a financial transaction based on a virtual corporate card may include a manager application 100, an employee application 200, and a payment server 300.

The manager application 100 is an application provided to the corporate card manager when a corporate card is issued by a financial company. When making a request for issuance of a corporate card to a financial company, the manager application 100 may be activated to the corporate card manager by the payment server 300.

The manager application 100 may issue and manage a virtual corporate card for employees by generating a virtual corporate card number to provide the virtual corporate card number to the employee application 200. At this time, the manager application 100 may generate a virtual corporate card number to transmit the virtual corporate card number directly to the employee application 200 or to provide the virtual corporate card number to the employee application 200 through an in-house system.

Moreover, the manager application 100 may set an individual virtual corporate card usage condition (e.g., the expiration date, usage limitations, or the like of a corporate card) for the issued virtual corporate card.

The manager application 100 may include a virtual corporate card number generation function, which is a function used to generate a virtual corporate card number. In this case, the manager application 100 generates a virtual corporate card number by a pre-stored virtual corporate card number generation function without the communication with the outside, such as the payment server 300 or the like. That is, the manager application 100 does not receive separate seed data from the outside in a process of generating a virtual corporate card number, thereby enhancing security. In addition, a payment may be used even in a situation where the communication with the outside is restricted.

Meanwhile, the virtual corporate card number is generated not to be duplicated with another virtual corporate card number. As a specific example, the virtual corporate card number may be generated based on time data (e.g., the length of time elapsed from the time of installation or registration) corresponding to a point in time when the virtual card number is requested. Accordingly, the manager application 100 may generate different virtual corporate card numbers depending on a generation time point, and the virtual corporate card number generated at a specific time point is not duplicated with the virtual corporate card number generated at another time point.

In an embodiment, the virtual corporate card number generation function may include a detailed code generation function and a detailed code combination function. That is, the virtual corporate card number may be generated by combining a plurality of detailed codes.

The detailed code generation function generates a plurality of detailed codes used when the payment server 300 searches for user identification (UID) or CID. Furthermore, the detailed code combination function generates a virtual corporate card number by combining a plurality of detailed codes generated by the detailed code generation function based on specific combination rules.

The employee application 200 receives and registers a virtual corporate card from the manager application 100, and processes financial transactions, using various payment methods based on the registered virtual corporate card.

In an embodiment, the employee application 200 may be activated through an employee authentication procedure. That is, an employee may install the employee application 200 in a user terminal; the employee application 200 may be activated by certifying that the employee is an employee of the corresponding corporate body. At this time, the employee authentication procedure may include an approval procedure of the manager application 100.

Besides, in another embodiment, the employee may apply for the issuance of a virtual corporate card number to the corporate card manager through the employee application 200. That is, the employee application 200 may make a request for the issuance of the virtual corporate card number to the manager application 100 or make a request for the issuance of the virtual corporate card number through an in-house system.

The employee application 200 receives the virtual corporate card number generated by the manager application 100 from the manager application 100. When the employee application 200 transmits the received virtual corporate card number to the payment server 300, the payment server 300 verifies the received virtual corporate card number, and stores the received virtual corporate card number in a storage area connected to the UID assigned to an employee, thereby registering a virtual corporate card. At this time, the UID is a value in the form of a unique code capable of identifying an employee by being assigned when the employee installs the employee application 200, when a user is registered in the employee application 200, or when an employee is authenticated.

In the meantime, the card number registered through the employee application 200 is a virtual corporate card number, not an actual corporate card number. In this way, security may be enhanced and unnecessary issuance of actual corporate card numbers may be reduced, thereby reducing the cost of card issuance. The detailed descriptions of the registration process and use process of a virtual corporate card of the employee application 200 will be described later.

In an embodiment, the employee application 200 may be a corporate body-dedicated application. The corporate body-dedicated application is an application provided by the payment server 300, and is an application capable of making financial transactions using a corporate card. An employee may receive a UID by registering a user in the corporate body-dedicated application provided from the payment server 300, and may register and use the virtual corporate card number issued to the employee in a storage area connected to the UID.

In the meantime, the corporate body-dedicated application is not limited to registering only the corporate card, and registers and uses an employee's personal card additionally. That is, the employee may register a plurality of cards including a corporate card and a personal card in a single application, and may select and use a card if necessary.

In another embodiment, the employee application 200 may be a personal card payment application. In other words, when the employee has a personal card payment application that has been previously used, the employee may additionally register and use the corporate card issued to the corresponding application. For example, for an employee to safely use his/her personal credit and debit card, when there is a variable virtual card number application by registering and using a fixed card number, the employee may authenticate that the employee is an employee of the corporate body, to which the employee belongs, in the variable virtual card number application and then may register the issued virtual corporate card number.

The manager application 100 and the employee application 200 may be provided in the form installed or embedded in a manager's user terminal and an employee's user terminal, respectively.

The payment server 300 is a server operated by a financial company such as a card issuer issuing a corporate card, a refining company, or the like.

The payment server 300 processes the virtual corporate card usage registration process and payment process in conjunction with the manager application 100 or the employee application 200.

The payment server 300 issues an actual corporate card number to a corporate body making a request for the issuance of a corporate card to provide the manager application 100 with the actual corporate card number.

The payment server 300 sets a virtual corporate card number generation condition for the manager application 100. The manager application 100 may generate a virtual corporate card number depending on the virtual corporate card number generation condition set by the payment server 300. For example, the manager application 100 may generate a virtual corporate card number using a virtual corporate card number generation algorithm assigned from the payment server 300 as a virtual corporate card generation condition.

The payment server 300 may perform a virtual corporate card usage registration process for registering and activating the virtual corporate card issued to an employee, in conjunction with the employee application 200.

As an embodiment of the virtual corporate card usage registration process, an employee card management module (not illustrated) for each corporate body and a corporate card management module (not illustrated) may be used. That is, the virtual corporate card usage registration process may include a process in which an employee stores and registers a virtual corporate card number in a storage area (hereinafter, an storage area for each employee) connected to the UID assigned to himself/herself in an employee card management module for each corporate body, and a process of determining the validity of whether the virtual corporate card number registered through the employee card management module for each corporate body in the corporate card management module is normally issued, and registering and activating the virtual corporate card number to be used.

As a specific example of determining the validity, the payment server 300 may compare and verify 1) a combination of the virtual corporate card number issued from the manager application 100 and registered in the storage area for each employee, and an employee, with 2) a combination of a virtual corporate card number and an employee within the payment server 300. At this time, the "combination of a virtual corporate card number and an employee" is a mapping relationship between the virtual corporate card number generated by the issuance of a manager and the employee subject to issuance. In this way, the payment server 300 may determine whether the virtual corporate card number received from the employee application 200 is a virtual corporate card number normally issued by the corporate card manager or whether the corporate card manager is an employee that actually issues the virtual corporate card number.

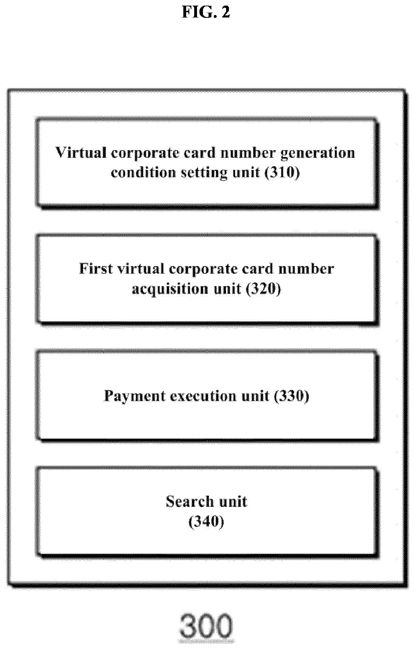

FIG. 2 is a block diagram of the payment server 300 according to an embodiment of the inventive concept.

Referring to FIG. 2, according to an embodiment of the inventive concept, the payment server 300 may include a virtual corporate card number generation condition setting unit 310, a first virtual corporate card number acquisition unit 320, a payment execution unit 330, and a search unit 340.

The virtual corporate card number generation condition setting unit 310 sets a virtual corporate card number generation condition for the manager application 100.

The manager application 100 generates a virtual corporate card number based on the virtual corporate card number generation condition (e.g., a virtual corporate card number generation algorithm) set by the payment server 300. Also, the payment server 300 may search for a CID in a virtual corporate card usage registration process or payment process based on a virtual corporate card number generation condition. That is, the payment server 300 may search for the CID based on a virtual corporate card number generation condition, and then may store a virtual corporate card number or actual corporate card number in a storage area (hereinafter, a 'storage area for each corporate body') connected to the CID or may extract the virtual corporate card number or actual corporate card number that has already been stored. The detailed description thereof will be described later.

The first virtual corporate card number acquisition unit 320 obtains the first virtual corporate card number issued to a first employee by the manager application 100.

The first virtual corporate card number is the virtual corporate card number generated by the manager application 100 at a point in time when the first employee makes a request for the virtual corporate card number. That is, the first employee may make a request for the issuance of a virtual corporate card number through the employee application 200; the manager application 100 may generate a first virtual corporate card number at a point in time when the first employee makes a request.

When an employee that receives a first virtual corporate card number and then registers the first virtual corporate card number makes a request for making a payment based on the first virtual corporate card number, the first virtual corporate card number acquisition unit 320 obtains the first virtual corporate card number.

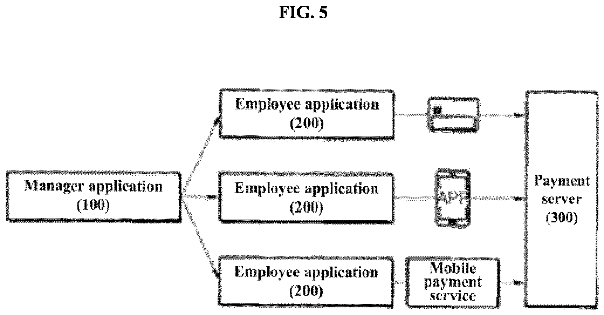

A method in which the first virtual corporate card number acquisition unit 320 obtains the first virtual corporate card number varies depending on the type of payment means used by the employee; specific embodiments will be described later with reference to FIG. 5.

The payment execution unit 330 makes a payment with the actual corporate card number found based on the first virtual corporate card number obtained by the first virtual corporate card number acquisition unit 320.

The search unit 340 searches for a UID or CID in a virtual corporate card number registration process or in a process of making a payment based on a virtual corporate card number.

A part or all of components constituting the search unit 340 may be configured to be included in the payment execution unit 330.

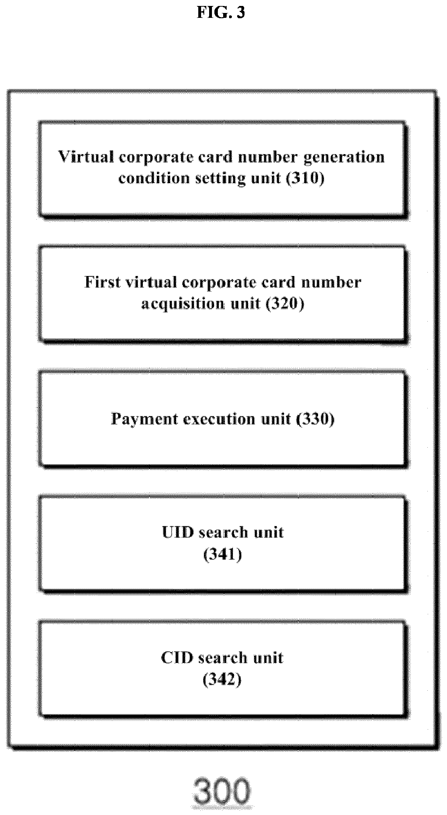

Referring to FIG. 3, the search unit 340 may include a UID search unit 341 and a CID search unit 342 that search for the UID and CID, respectively.

The UID search unit 341 searches for the UID assigned to an employee.

The payment server 300 may extract the virtual corporate card number from the storage area (a storage area for each employee) connected to the UID found by the UID search unit 341.

The CID search unit 342 searches for the CID based on the virtual corporate card number.

The payment server 300 may extract a virtual corporate card number or an actual corporate card number already stored in a storage area (a storage area for each corporate body) connected to the CID found by the CID search unit 342.

As a specific example, to verify the validity of the virtual corporate card number, the payment server 300 may determine whether the virtual corporate card number received from the employee application 200 is the same as a virtual corporate card number extracted from the storage area (storage area for each corporate body) connected to the CID found based on the corresponding virtual corporate card number.

As another specific example, the payment server 300 may search for a CID based on the virtual corporate card number received from the employee application 200 to make a payment, and then may extract the actual corporate card number stored in the storage area (storage area for each corporate body) connected to the corresponding CID.

That is, the payment server 300 itself has a search algorithm for searching for the UID or CID. Each search algorithm (UID search algorithm or CID search algorithm) for searching for the UID or CID may be partially or entirely the same as one another; alternatively, different search algorithms may be applied.

As an embodiment of the search algorithm, the payment server 300 may search for the UID or CID based on a plurality of detailed codes constituting a virtual corporate card number. In this case, the payment server 300 has a correlation used when searching for a UID or CID, between a plurality of detailed codes. The payment server 300 searches for the UID or CID by performing calculation based on the correlation between the plurality of detailed codes. In particular, the payment server 300 extracts the plurality of detailed codes included in the virtual corporate card number received from the employee application 200. The payment server 300 searches for the UID or CID based on a plurality of detailed codes extracted through the search algorithm kept by the payment server 300. At this time, the search algorithm searches for the UID or CID by performing calculation based on the correlation between the plurality of detailed codes.

More specifically, the search algorithm included in the payment server 300 may search for the UID or CID by performing calculation (setting the search path) based on the correlation between the plurality of detailed codes from waypoints, via the waypoints corresponding to one or more detailed codes among a plurality of detailed codes. At this time, there are one or more waypoints, and there is no limit to the number and order.

As a specific example of a plurality of detailed codes, the plurality of detailed codes may include the first code and the second code; the first code and the second code have a correlation used to search for the UID or CID. For example, the first code and the second code may be a code for the first corporate body and a code for the second corporate body included in the virtual corporate card number; alternatively, the first code and the second code may be a first personal code and a second personal code included in the virtual employee card number.

Also, as another specific example, the virtual employee card number may be generated on the same principle as the virtual corporate card number. That is, the virtual employee card number generation function generating a virtual employee card number may include a detailed code generation function included in the virtual corporate card number generation function generating the virtual corporate card number, the detailed code generation function the same as the detailed code combination function, and the detailed code combination function.

In an embodiment, first code and second code have a correlation for the payment server 300 to search for a UID or CID. However, the manager application 100 may only include the first function to generate the first code and the second function to generate the second code through the detailed code generation functions to improve security, and may not include the data about the correlation between the first code and the second code.

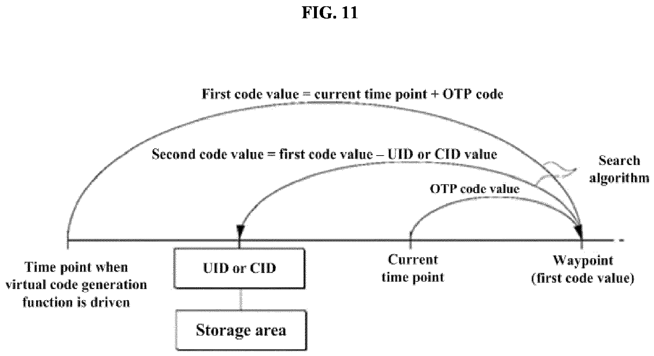

In the meantime, each of the first code and the second code may play a role in the search process. The first code may include information about a waypoint; the second code may include information necessary for calculation capable of being reached from the waypoint to the storage location of the actual code. Specific examples of the first code and the second code will be described later with reference to FIG. 11.

Besides, in another embodiment, the payment server may further include a payment means registration unit (not illustrated). The payment means registration unit registers an offline payment means (e.g., an empty card, a wearable device, or the like) in the employee application 200.

In particular, the payment means registration unit may connect the offline payment means to the storage area for each employee assigned to an employee, in conjunction with the employee card management module for each corporate body. For example, the payment means registration unit may store and register an empty card number or identification number, which is assigned to the offline payment means, by matching the empty card number or identification number with the virtual corporate card number registered in the employee card management module for each corporate body.

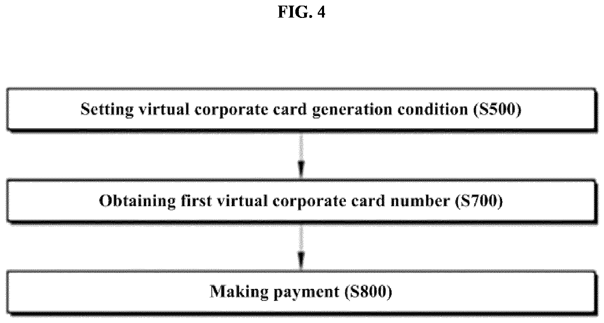

FIG. 4 is a flowchart schematically illustrating a method of providing a financial transaction based on a virtual corporate card according to an embodiment of the inventive concept.

Referring to FIG. 4, according to an embodiment of the inventive concept, a method for providing a virtual corporate card-based financial transaction may include step S500 of setting a virtual corporate card generation condition, step S700 of obtaining a first virtual corporate card number, and step S800 of making a payment.

Step S500 is a step in which the payment server 300 sets a virtual corporate card generation condition for the manager application 100. The manager application 100 may generate a virtual corporate card number used to search for an actual corporate card number depending on the set generation condition.

Step S700 is a step in which the payment server 300 obtains a first virtual corporate card number issued to a first employee by the manager application 100. At this time, the first virtual corporate card number is generated by the manager application 100 at a point in time when the first employee makes a request for the virtual corporate card number.

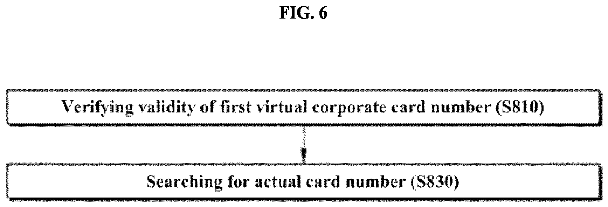

Step S800 is a step in which the payment server 300 makes a payment with the actual corporate card number found based on the first virtual corporate card number received from the employee application 200. The detailed descriptions of a payment process will be described later with reference to FIG. 6.

FIG. 5 is an exemplary view illustrating examples according to a payment means for a step of obtaining a virtual corporate card number by the payment server 300, according to an embodiment of the inventive concept.

An employee may select and use a payment means that is convenient for the employee; even though the employee uses any type of a payment means, the virtual corporate card number issued to the employee is not exposed to the outside. Accordingly, CNP fraud and the like may be prevented from occurring with the virtual corporate card number.

In an embodiment, the employee may use a personal card payment application (e.g., a variable virtual card number application used by registering a fixed card number) that was previously used as a payment means. That is, the employee may register and use the virtual corporate card number issued using the previously used personal card payment application as the employee application 200.

In particular, the employee's personal card payment application generates a virtual employee card number matched with the additionally-registered virtual corporate card number. The employee's personal card payment application may make a request for making a payment with the virtual corporate card number by providing the generated virtual employee card number to the payment terminal (e.g., transmitting a virtual employee card number to the payment terminal through NFC reading or QR code scanning upon making an offline payment).

In this case, the payment server 300 receives a virtual employee card number from a personal card payment application, and then extracts and obtains a virtual corporate card number from the storage area found by the received virtual employee card number. At this time, the virtual employee card number is self-generated by a virtual employee card number generation function pre-stored in the personal card payment application 200, and is changed every unit time.

In the meantime, the virtual employee card number may include an identifier number (BIN). The identifier number (BIN) is used to identify whether the virtual employee card number received by the payment server 300 from the personal card payment application is a virtual employee card number for the employee's personal card, or a virtual employee card number for the virtual corporate card issued to the employee. As a specific example, the first six digits of the virtual corporate card number may be composed of a specific identifier number (BIN) for each corporate body. The payment server 300 may extract the first six digits of the virtual employee card number received from the personal card payment application, and then may identify whether the received virtual employee card number corresponds to a virtual corporate card number, and which corporate body issues the virtual corporate card number.

In another embodiment, an employee may register and use separate physical payment means as a payment means.

The "physical payment means" is a device capable of making financial transactions and is a payment means incapable of directly generating a virtual card number. The physical payment means may receive code data capable of generating financial transactions or code data matched with the actual card number, may make an offline payment based on short-range communication, or may make an online payment in conjunction with a user terminal, but is not limited thereto.

As a specific example, the physical payment means may be an empty card of which the number is not printed on the surface. In this case, the payment server 300 may store and register the corresponding empty card as a physical payment means capable of making a payment based on the virtual corporate card number issued to the employee, by connecting the empty card number or identification number assigned to the empty card to the storage area for each employee assigned to the employee. The payment server 300 receives the first empty card number from the empty card, and extracts and obtains the first virtual corporate card number from the storage area found by the received first empty card number. In this case, the first empty card number is a number stored in an empty card registered by the first employee in the employee application 200 and is connected to a storage area where the first virtual corporate card number is stored.

In another embodiment, an employee may use a separate mobile payment service as payment means. That is, the employee may register the virtual corporate card number in the mobile payment service, and may use a corporate card payment, using the mobile payment service through the employee application 200.

The "mobile payment service" is a service capable of purchasing products or services online and offline through a mobile device, and is a service capable of making a payment through a card registered in the mobile device without having a physical card by registering a fixed card number in the mobile device. For example, the mobile payment service includes, but is not limited to, a simple payment service such as Google Pay, Apple Pay, Samsung Pay, or the like.

In this case, when an employee registers a virtual corporate card number in the mobile payment service, the virtual corporate card number is stored in the token server (hereinafter, a mobile payment service server) of a company providing the mobile payment service. In addition, a virtual token matched with the corresponding virtual corporate card number is stored in the employee's mobile payment service application. The employee may make a request for making a payment using the virtual corporate card number, by transmitting the virtual token to the payment terminal.

In the meantime, the virtual token stored in the mobile payment service application may include an identifier number (BIN). The identifier number (BIN) is used to identify whether the virtual token received from the employee's mobile payment service application by the mobile payment service server is a virtual token corresponding to the employee's personal card, or whether the received virtual token is the virtual token corresponding to the virtual corporate card issued to the employee. When the result of determining the identifier number (BIN) included in the received virtual token indicates that the received virtual token corresponds to a virtual token corresponding to the corresponding virtual corporate card number, the mobile payment service server searches for a virtual corporate card number corresponding to the corresponding virtual token and transmits the virtual corporate card number to the payment server 300.

FIG. 6 is a flowchart schematically illustrating a detailed process of a payment execution step according to an embodiment of the inventive concept.

Referring to FIG. 6, according to an embodiment of the inventive concept, step S800 of making a payment may include step S810 of verifying the validity of a first virtual corporate card number and step S830 of searching for an actual card number.

Step S810 is a step in which the payment server 300 verifies the validity of the first virtual corporate card number obtained from the employee application 200.

The payment server 300 determines whether the obtained virtual corporate card number is a virtual corporate card number generated by the manager application 100 to approve a payment.

In particular, the payment server 300 determines whether the virtual corporate card number obtained from the employee application 200 is the same as the virtual corporate card number stored in the storage area (storage area for each corporate body in the corporate card management module) connected to the CID found by the virtual corporate card number. When the determination result indicates that the obtained virtual corporate card number is the same as the stored virtual corporate card number, the payment server 300 extracts the actual corporate card number stored in the corresponding CID to make a payment.

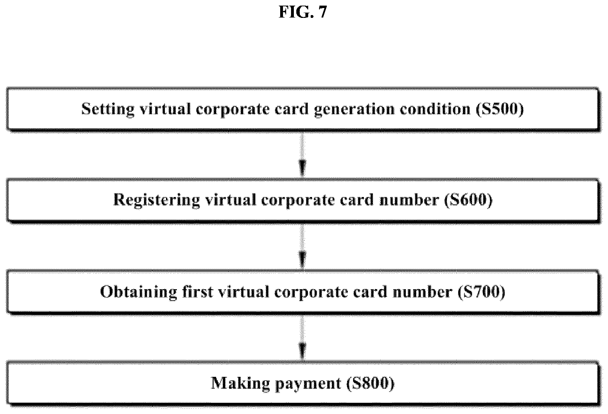

FIG. 7 is a flowchart illustrating a method of providing a financial transaction based on a virtual corporate card further including a virtual corporate card number registration step according to an embodiment of the inventive concept.

Referring to FIG. 7, according to an embodiment of the inventive concept, a method for providing a virtual corporate card-based financial transaction may further include step S600 of registering a virtual corporate card number.

Step S600 is a step in which the payment server 300 receives and registers a virtual corporate card number from the manager application 100 or the employee application 200.

In an embodiment, the payment server 300 has only the search algorithm, and may not have a virtual corporate card number generation function. In this case, when the employee application 200 receives the virtual corporate card number generated from the manager application 100 and transmits the virtual corporate card number to the payment server 300, the payment server 300 verifies and registers the received virtual corporate card number, using the search algorithm.

In another embodiment, the payment server 300 and the manager application 100 may have the same virtual corporate card number generation function. That is, the payment server 300 stores and holds virtual corporate card number generation function algorithms in CIDs for corporate bodies, respectively.

In this case, when the payment server 300 receives only seed data (e.g., time data, or the like) used to generate a virtual corporate card number without the need to obtain the generated virtual corporate card number itself, the payment server 300 may generate the same virtual corporate card number using the same virtual corporate card number generation function.

In another embodiment, the manager application 100 may transmit a virtual corporate card number to the payment server 300 as well as to the employee application 200. That is, the virtual corporate card number may be stored and managed in the payment server 300 itself as well as the storage area connected to the UID assigned to the employee.

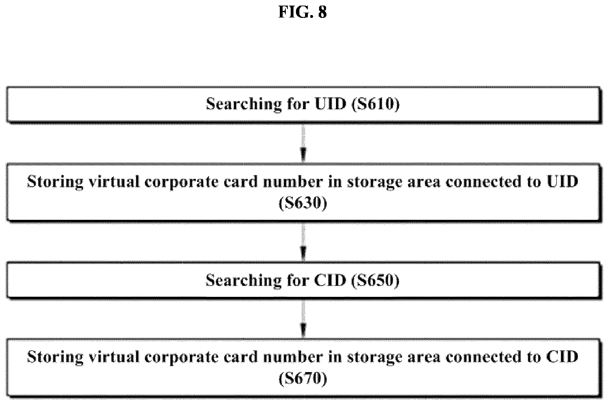

FIG. 8 is a flowchart schematically illustrating a detailed process of a virtual corporate card number registration step according to an embodiment of the inventive concept.

The step S600 of registering a virtual corporate card number is a step of assigning a virtual corporate card number to the employee application 200 and then registering the virtual corporate card number through the employee application 200.

Referring to FIG. 8, according to an embodiment of the inventive concept, the step S600 of registering a virtual corporate card number may include a step S610 of searching for a UID, step S630 of storing a virtual corporate card number in a storage area connected to a UID, step S650 of searching for the CID, and step S670 of storing the virtual corporate card number in the storage area connected to the CID.

Step S610 is a step in which the payment server 300 searches for a UID assigned to an employee upon performing registration in the employee application 200. The contents of the algorithm of searching for the UID are the same as the above-described contents, and thus are omitted.

Step S630 is a step in which the payment server 300 stores the virtual corporate card number received from the employee application 200 in the storage area connected to the found UID.

Step S650 is a step in which the payment server 300 searches for the CID assigned to the corporate body based on the received virtual corporate card number.

Step S670 is a step in which the payment server 300 stores the received virtual corporate card number in the storage area connected to the found CID.

The virtual corporate card number is stored and managed in a storage area connected to each of the UID assigned to an employee and the CID assigned to a corporate body, through step S610 to step S670.

In an embodiment, the individual virtual corporate card number usage condition may be set for the storage area connected to the UID or CID by matching the virtual corporate card number received by the payment server 300; an individual virtual corporate card number usage condition may include expiration date, usage limitations, and the like.

As a specific example where an expiration date is set, the manager application 100 may transmit the virtual corporate card number and the expiration date matched with the virtual corporate card number to the payment server 300. The payment server 300 matches the expiration date to the received virtual corporate card number and stores and sets the matched results.

As another specific example where the expiration date is set, the payment server 300 stores the virtual corporate card number in a storage area (storage area for each corporate body) connected to the CID of a specific corporate body in the corporate card management module, and transmits identification information of employees, and all or part of the registered virtual corporate card number to the manager application 100 of the corresponding corporate body. The manager application 100 transmits an expiration date corresponding to information received from the payment server 300 to the payment server 300. The payment server 300 matches the received expiration date with the target virtual corporate card number and stores and sets the matched results.

As another specific example where the expiration date is set, when the manager application 100 transmits only the expiration date and employee identification information to the payment server 300, the payment server 300 may match the expiration date with the virtual corporate card number through the employee identification information to store and set the matched result, at the usage registration of an employee.

In another embodiment, when the stored expiration date expires, the virtual corporate card number may be automatically deactivated or deleted to prevent a payment from being made. In this way, the corporate card manager may conveniently manage the expiration date of a corporate card, without the need to retrieve a physical card after issuing the physical card.

In another embodiment, the payment server 300 may organize and provide a manager with a corporate card usage statement for each employee.

In particular, the payment server 300 matches the virtual corporate card number with employee identification information and then stores and registers the matched results. Upon making a payment with a specific virtual corporate card number, the payment server 300 may identify an employee who makes a request for making a payment based on employee identification information matched with the corresponding virtual corporate card number. Accordingly, the manager of a corporate body does not need to receive and manage receipts individually from employees, and the payment server 300 may settle and provide a usage statement for each employee.

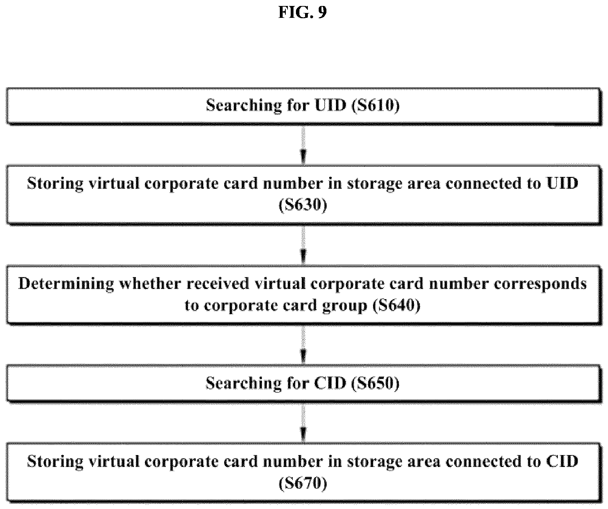

FIG. 9 is a flowchart illustrating a virtual corporate card number registration step further including the step S640 of identifying a corporate card group according to an embodiment of the inventive concept.

Step S640 is a step in which the payment server 300 determines whether the virtual corporate card number received from the employee application 200 corresponds to the corporate card group.

The "corporate card group" is a group to which cards (corporate cards) issued to a corporate body, not an individual, belong. That is, the determining of the corporate card group means determining whether a target card is a personal card or a corporate card.

In an embodiment of determining the corporate card group, the payment server 300 determines whether the received virtual corporate card number corresponds to the corporate card group, based on the identifier number (BIN) included in the received virtual corporate card number. That is, the virtual corporate card number corresponding to the corporate card group includes a specific identifier number (BIN); the payment server 300 has a group database including corporate body information matched with the identifier number. When the identifier number (BIN) extracted from the received virtual corporate card number is identified as the identifier number (BIN) assigned to the corporate card group, the payment server 300 proceeds with the virtual corporate card number usage registration process.

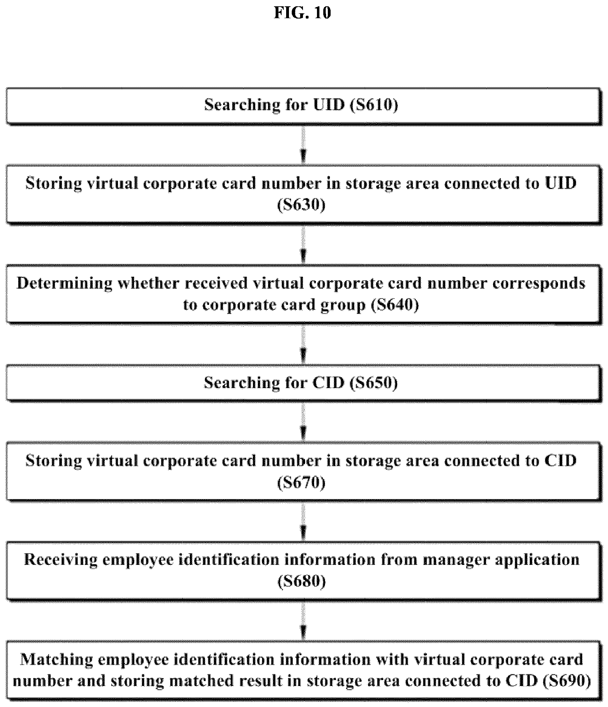

FIG. 10 is a flowchart illustrating a virtual corporate card number registration step further including a step of receiving and storing employee identification information according to an embodiment of the inventive concept.

Referring to FIG. 10, as compared with FIG. 9, step S680 of receiving employee identification information from a manager application and step S690 of matching employee identification information with a virtual corporate card number and storing the matched result in a storage area connected to a CID may be further included.

The employee using a virtual corporate card number may be connected to a virtual corporate card number by matching employee identification information with the virtual corporate card number and storing the matched results. In this way, the payment server 300 may accurately calculate the payment amount of the corresponding corporate body and may determine whether a payment is the normal payment of the corresponding corporate body. Moreover, the corporate card manager of a corporate body may automatically receive the payment amount of each employee and may manage the payment statement for each employee.

FIG. 11 is an exemplary diagram illustrating that a search algorithm is driven according to an embodiment of the inventive concept.

As described above, the payment server 300 has a search algorithm for searching for a UID or CID. Each search algorithm (UID search algorithm or CID search algorithm) for searching for the UID or CID may be partially or entirely the same as one another; alternatively, different search algorithms may be applied.

Furthermore, as described above, the first code and the second code may be a code for the first corporate body and a code for the second corporate body included in the virtual corporate card number; alternatively, the first code and the second code may be a first personal code and a second personal code included in the virtual employee card number. Specific examples of the first code and the second code described later may be identically applied to each case.

As a specific example of the first code and the second code, the code value (first code value) corresponding to the first code may be a value obtained by adding an OTP code value to the count corresponding to the current time point based on the driving time point of the virtual corporate card number generation function. The first code value operates as a waypoint in a search process. The code value (a second code value) corresponding to the second code may be a value obtained by subtracting a code value corresponding to the UID or CID from the first code value. The second code value is a count from a waypoint (first code value) to the code value corresponding to the UID or CID.

That is, an embodiment of the first code and second code generated by the manager application 100 is as follows.

$$\text{First code} = \text{current time count} + \text{OTP code}$$

$$\text{Second code} = \text{first code} - \text{storage location of actual code}$$

The OTP code is a code generated by the OTP code generation function included in the detailed code generation function, and is a code generated differently every time point. Accordingly, the detailed code may be generated differently depending on a generation time point of the virtual code, thereby preventing the detailed code from being redundantly generated and enhancing security.

As another specific example of the first code and the second code, the code value (the first code value) corresponding to the first code may be a value obtained by adding the UID to the OTP code value; the code value (the second code value) corresponding to the second code may be an OTP code value.

That is, another embodiment of the first code and the second code generated by the manager application 100 is as follows.

$$\text{First code} = \text{OTP code} + \text{UID}$$

$$\text{Second code} = \text{OTP code}$$

As illustrated in FIG. 11, the payment server 300 searches for a point matching the UID or CID by moving along a track in the direction set by the count corresponding to the second code value, via the count on the track matched with the first code value as the waypoint and searches for the storage area connected to the corresponding UID or CID.

The steps of a method or algorithm described in connection with the embodiments of the inventive concept may be embodied directly in hardware, in a software module executed by hardware, or in a combination thereof. The software module may reside on a Random Access Memory (RAM), a Read Only Memory (ROM), an Erasable Programmable ROM (EPROM), an Electrically Erasable Programmable ROM (EEPROM), a Flash memory, a hard disk, a removable disk, a CD-ROM, or a computer readable recording medium in any form known in the art to which the inventive concept pertains.

Although embodiments of the inventive concept have been described herein with reference to accompanying drawings, it should be understood by those skilled in the art that the inventive concept may be embodied in other specific forms without departing from the spirit or essential features thereof. Therefore, the above-described embodiments are exemplary in all aspects, and should be construed not to be restrictive.

Further aspects of the invention are described below:

Aspect 1: A virtual corporate card-based financial transaction providing method performed by a payment server, the method comprising:

setting a virtual corporate card number generation condition for a manager application, wherein the manager application is installed in a user terminal of a corporate card manager, and generates a virtual corporate card number used to search for an actual corporate card number;
obtaining a first virtual corporate card number issued to a first employee by the manager application, wherein the first virtual corporate card number is generated by the manager application at a point in time when the first employee makes a request for the virtual corporate card number; and
making a payment with the actual corporate card number found based on the first virtual corporate card number.

Aspect 2: The method of aspect 1, wherein the first virtual corporate card number is generated based on time data corresponding to the point in time when the virtual corporate card number is requested, and is not duplicated with a virtual corporate card number generated at another point in time.

Aspect 3: The method of aspect 1, wherein the obtaining of the first virtual corporate card number includes:

extracting and obtaining the first virtual corporate card number from a storage area found by a first virtual employee card number, and
wherein the first virtual employee card number is self-generated by a virtual employee card number generation function pre-stored in an employee application and is changed every unit time.

Aspect 4: The method of aspect 1, wherein the obtaining of the first virtual corporate card number includes:

extracting and obtaining the first virtual corporate card number from a storage area found by a first empty card number,

wherein the first empty card number is a number stored in an empty card registered by the first employee in an employee application and is connected to a storage area where the first virtual corporate card number is stored, and

wherein a number of the empty card is not printed on a surface.

Aspect 5: The method of aspect 1, wherein the obtaining of the first virtual corporate card number includes:

when the first employee registers and uses the first virtual corporate card number in a separate mobile payment service,

receiving, by the payment server, the first virtual corporate card number from a mobile payment service server based on an identifier number (BIN) included in the first virtual corporate card number when the first employee uses a corporate card payment by using the mobile payment service.

Aspect 6: The method of aspect 1, wherein the making of the payment includes:
approving the payment by determining whether the first virtual corporate card number is a virtual corporate card number generated by the manager application.
Aspect 7: The method of aspect 6, wherein the making of the payment includes:

determining whether the first virtual corporate card number is identical to a virtual corporate card number stored in a storage area found by the first virtual corporate card number; and

searching for the actual corporate card number based on the first virtual corporate card number.

Aspect 8: The method of aspect 7, wherein the first virtual corporate card number includes a plurality of detailed codes used to search for the actual corporate card number,

wherein the plurality of detailed codes have a correlation for searching for the actual corporate card number, and
wherein the actual corporate card number is found by performing calculation based on the correlation from a waypoint via the waypoint corresponding to one or more detailed codes of the plurality of detailed codes.

Aspect 9: The method of aspect 1, further comprising:
receiving and registering the first virtual corporate card number from an employee application or the manager application for use, wherein the employee application is an application of an employee receiving the first virtual corporate card number generated from the manager application.
Aspect 10: The method of aspect 9, wherein the receiving and registering of the first virtual corporate card number includes:

when receiving a virtual corporate card number from the employee application,
searching for a user identification (UID) assigned at registration in the employee application;
storing the received virtual corporate card number in a storage area connected to the UID;
searching for a company identification (CID) based on the received virtual corporate card number; and
storing the received virtual corporate card number in a storage area connected to the CID.

Aspect 11: The method of aspect 10, wherein the virtual corporate card number generation condition is stored in the storage area connected to the CID by being matched with the received virtual corporate card number, and wherein the virtual corporate card number generation condition includes expiration date or usage limitations.
Aspect 12: The method of aspect 11, wherein the virtual corporate card number stored in the storage area connected to the CID is deactivated or deleted when the expiration date expires.
Aspect 13: The method of aspect 10, further comprising:
determining whether the received virtual corporate card number corresponds to a corporate card group, based on an identifier number (BIN) included in the received virtual corporate card number.
Aspect 14: The method of aspect 10, wherein the receiving and registering of the first virtual corporate card number further includes:

receiving employee identification information from the manager application; and
matching and storing the employee identification information with the virtual corporate card number in the storage area connected to the CID.

Aspect 15: A program for providing a virtual corporate card-based financial transaction that is stored in a medium to execute a method of aspect 1 in combination with a computer that is a piece of hardware.

Aspect 16: A system for providing a virtual corporate card-based financial transaction, the system comprising:

a virtual corporate card number generation condition setting unit configured to set a virtual corporate card number generation condition for a manager application, wherein the manager application is installed in a user terminal of a corporate card manager, and generates a virtual corporate card number used to search for an actual corporate card number;

a first virtual corporate card number acquisition unit configured to obtain a first virtual corporate card number issued to a first employee by the manager application, wherein the first virtual corporate card number is generated by the manager application at a point in time when the first employee makes a request for the virtual corporate card number; and

a payment execution unit configured to make a payment with the actual corporate card number found based on the first virtual corporate card number.

Aspect 17: The system of aspect 16, further comprising:

a UID search unit configured to search for a UID assigned at registration in an employee application;

a CID search unit configured to search for a CID based on the first virtual corporate card number; and

an actual corporate card number search unit configured to search for the actual corporate card number based on the first virtual corporate card number.

**Claims**

1. A method for providing financial transaction based on a virtual corporate card, performed by a payment server (300), the method comprising:

setting (S500), a condition for generating a virtual corporate card number used to search for an actual corporate card number in a manager application (100) installed on a manager's user terminal;

registering (S600), a first virtual corporate card number by receiving the first virtual corporate card number from an employee application (200) installed on an employee's user terminal or the manager application (100), wherein the employee application (200) is an application of an employee provided the first virtual corporate card number generated by the manager application (100) based on the condition;

obtaining (S700), the first virtual corporate card number issued to a first employee by the manager application (100), wherein the first virtual corporate card number is generated by the manager application (100) at a point in time when the first employee makes a request for the virtual corporate card number; and

making (S800), a payment with the actual corporate card number found based on the first virtual corporate card number,

**characterized in that**:

the registering the first virtual corporate card number comprises:

when receiving a virtual corporate card number from the employee application (200), searching (S610), for a user identification (UID) assigned at registration in the employee application (200), wherein the UID is a value in the form of a unique code assigned without redundancy for each employee to identify an employee;

storing (S630), the received virtual corporate card number in a storage area connected to the UID;

searching for (S650), a company identification (CID) based on the received virtual corporate card number, wherein the CID is a value in the form of a unique code assigned without redundancy for each organization to identify an organization such as a corporate body; and

storing (S670), the received virtual corporate card number in a storage area connected to the CID,

the making the payment comprises:

searching for the UID based on a correlation between a plurality of detailed codes included in the first virtual corporate card number;

extracting the virtual corporate card number stored in the storage area connected to the found UID;

searching for the CID based on a correlation between a plurality of detailed codes included in the virtual corporate card number;

extracting the actual corporate card number stored in the storage area connected to the found CID; and

making the payment with the extracted actual corporate card number.

2. The method of claim 1, wherein the virtual corporate card number includes an expiration date, and wherein the virtual corporate card number is deactivated or deleted when the expiration date expires.

3. The method of claim 1, wherein the registering of the first virtual corporate card number further includes:
determining whether the received virtual corporate card number corresponds to a corporate card group based on an identifier number included in the received virtual corporate card number.

4. The method of claim 1, wherein the registering of the first virtual corporate card number further includes:

receiving employee identification information from the manager application (100); and

matching and storing the employee identification information with the virtual corporate card number in the storage area connected to the CID.

5. The method of claim 1, wherein the first virtual corporate card number is generated based on time data corresponding to the point in time when the virtual corporate card number is requested, and is not duplicated with a virtual corporate card number generated at another point in time.

6. The method of claim 1, wherein the making of the payment includes:
approving the payment by determining whether the first virtual corporate card number is a virtual corporate card number generated by the manager application (100).

7. The method of claim 1, wherein the first virtual corporate card number includes a plurality of detailed codes used to search for the actual corporate card number,

wherein the plurality of detailed codes have the correlation for searching for the actual corporate card number, and

wherein the actual corporate card number is found by performing calculation based on the correlation from a waypoint via the waypoint corresponding to one or more detailed codes of the plurality of detailed codes.

8. A payment server (300) for providing financial transaction based on a virtual corporate card, the payment server (300) comprising:

a virtual corporate card number generation condition setting unit (310) configured to set a condition for generating a virtual corporate card number used to search for an actual corporate card number in a manager application (100) installed on a manager's user terminal;

a first virtual corporate card number acquisition unit (320) configured to obtain a first virtual corporate card number issued to a first employee by the manager application (100), wherein the first virtual corporate card number is generated by the manager application (100) at a point in time when the first employee makes a request for the virtual corporate card number; and

a payment execution unit (330) configured to make a payment with the actual corporate card number found based on the first virtual corporate card number,

**characterized in that**:

the payment server (100) is further configured to register, a first virtual corporate card number by receiving the first virtual corporate card number from an employee application (200) installed on an employee's user terminal or the manager application (100), wherein the employee application (200) is an application of an employee provided the first virtual corporate card number generated by the manager application (100) based on the condition,

when registering the first virtual corporate card number, the payment server (100) is further configured to:

when receiving a virtual corporate card number from the employee application (200), search for a user identification (UID) assigned at registration in the employee application (200), wherein the UID is a value in the form of a unique code assigned without redundancy for each employee to identify an employee,

store the received virtual corporate card number in a storage area connected to the UID,

searching for a company identification (CID) based on the received virtual corporate card number, wherein the CID is a value in the form of a unique code assigned without redundancy for each organization to identify an organization such as a corporate body, and

store the received virtual corporate card number in a storage area connected to the CID,

when making the payment with the actual corporate card number, the payment server (100) is further configured to:

search for the UID based on a correlation between a plurality of detailed codes included in the first virtual corporate card number,

extract the virtual corporate card number stored in the storage area connected to the found UID,

search for the CID based on a correlation between a plurality of detailed codes included in the virtual corporate card number,

extract the actual corporate card number stored in the storage area connected to the found CID, and

make the payment with the extracted actual corporate card number.

9. The payment server of claim 8, wherein the virtual corporate card number includes an expiration date, and wherein the virtual corporate card number is deactivated or deleted when the expiration date expires.

10. The payment server of claim 8, wherein the registering of the first virtual corporate card number, the payment server is further configured to:
determine whether the received virtual corporate card number corresponds to a corporate card group based on an identifier number included in the received virtual corporate card number.

11. The payment server of claim 8, wherein the registering of the first virtual corporate card number, the payment server is further configured to:

receive employee identification information from the manager application (100), and
match and store the employee identification information with the virtual corporate card number in the storage area connected to the CID.

12. The payment server of claim 8, wherein the first virtual corporate card number is generated based on time data corresponding to the point in time when the virtual corporate card number is requested, and is not duplicated with a virtual corporate card number generated at another point in time.

13. The payment server of claim 8, when making the payment with the actual corporate card number, the payment server (100) is further configured to:
approve the payment by determining whether the first virtual corporate card number is a virtual corporate card number generated by the manager application (100).

14. The payment server of claim 8, wherein the first virtual corporate card number includes a plurality of detailed codes used to search for the actual corporate card number,

wherein the plurality of detailed codes have the correlation for searching for the actual corporate card number, and
wherein the actual corporate card number is found by performing calculation based on the correlation from a waypoint via the waypoint corresponding to one or more detailed codes of the plurality of detailed codes.

**FIG. 1**

**FIG. 2**

Virtual corporate card number generation
condition setting unit (310)

First virtual corporate card number
acquisition unit (320)

Payment execution unit (330)

Search unit
(340)

300

**FIG. 3**

Virtual corporate card number generation condition setting unit (310)

First virtual corporate card number acquisition unit (320)

Payment execution unit (330)

UID search unit (341)

CID search unit (342)

300

FIG. 4

Setting virtual corporate card generation condition (S500)

Obtaining first virtual corporate card number (S700)

Making payment (S800)

FIG. 5

FIG. 6

| Verifying validity of first virtual corporate card number (S810) |
| --- |

| Searching for actual card number (S830) |
| --- |

FIG. 7

Setting virtual corporate card generation condition (S500)

Registering virtual corporate card number (S600)

Obtaining first virtual corporate card number (S700)

Making payment (S800)

**FIG. 8**

```
┌─────────────────────────────────────────────────────────────┐
│                  Searching for UID (S610)                    │
└─────────────────────────────────────────────────────────────┘
                              │
                              ▼
┌─────────────────────────────────────────────────────────────┐
│ Storing virtual corporate card number in storage area        │
│ connected to UID                                             │
│                          (S630)                              │
└─────────────────────────────────────────────────────────────┘
                              │
                              ▼
┌─────────────────────────────────────────────────────────────┐
│                  Searching for CID (S650)                    │
└─────────────────────────────────────────────────────────────┘
                              │
                              ▼
┌─────────────────────────────────────────────────────────────┐
│ Storing virtual corporate card number in storage area        │
│ connected to CID                                             │
│                          (S670)                              │
└─────────────────────────────────────────────────────────────┘
```

**FIG. 9**

| Searching for UID (S610) |
|---|

| Storing virtual corporate card number in storage area connected to UID (S630) |
|---|

| Determining whether received virtual corporate card number corresponds to corporate card group (S640) |
|---|

| Searching for CID (S650) |
|---|

| Storing virtual corporate card number in storage area connected to CID (S670) |
|---|

FIG. 10

Searching for UID (S610)

↓

Storing virtual corporate card number in storage area connected to UID (S630)

↓

Determining whether received virtual corporate card number corresponds to corporate card group (S640)

↓

Searching for CID (S650)

↓

Storing virtual corporate card number in storage area connected to CID (S670)

↓

Receiving employee identification information from manager application (S680)

↓

Matching employee identification information with virtual corporate card number and storing matched result in storage area connected to CID (S690)

**FIG. 11**

First code value = current time point + OTP code

Second code value = first code value – UID or CID value

OTP code value

Search algorithm

Time point when virtual code generation function is driven

UID or CID

Storage area

Current time point

Waypoint (first code value)